# EUROPÄISCHE PATENTANMELDUNG

(11) **EP 3 058 799 A1**
(43) Veröffentlichungstag der Anmeldung: **24.08.2016**
(21) Anmeldenummer: 16151437.7
(22) Anmeldetag: 15.01.2016
(51) Int. Cl.: A01B 73/04, A01D 78/10

(54) **LANDWIRTSCHAFTLICHES ANBAUGERÄT**

(30) Priorität: 18.02.2015 DE 102015002160
(71) Anmelder: PÖTTINGER Landtechnik GmbH, 4710 Grieskirchen (AT)
(72) Erfinder: Lehner, Josef, 4732 St. Thomas (AT); Prechtl, Wolfgang, 4722 Bruckwaasen (AT)
(74) Vertreter: Thoma, Michael

(57) **Zusammenfassung**

Die vorliegende Erfindung betrifft ein landwirtschaftliches Anbaugerät beispielsweise in Form einer Heuwerbungsmaschine oder einer Mähmaschine, mit einem Maschinenrahmen 5, der durch ein Fahrwerk 7am Boden abstützbar und durch eine Anbauvorrichtung 8 an einem Schlepper anbaubar ist, sowie mehreren Arbeitsaggregaten 2, die an zumindest einem Tragarm 9 angelenkt sind, der an dem Maschinenrahmen um eine liegende, etwa in Fahrtrichtung weisende Tragarmschwenkachse 10 schwenkbar gelagert und aus einer abgesenkten Arbeitsstellung in eine angehobene Transport- und/oder Vorgewendestellung verbringbar ist. Erfindungsgemäß sind an dem zumindest einen Tragarm zumindest zwei Schwenkarme 13 befestigt, die jeweils ein Arbeitsaggregat tragen und am Tragarm jeweils schwenkbar um eine Schwenkarmschwenkachse 14 gelagert sind, die sich quer zur Tragarmlängsachse und quer zur Fahrtrichtung 6 erstreckt.

## Beschreibung

Die vorliegende Erfindung betrifft ein landwirtschaftliches Anbaugerät beispielsweise in Form einer Heuwerbungsmaschine oder einer Mähmaschine, mit einem Maschinenrahmen, der durch ein Fahrwerk am Boden abstützbar und durch eine Anbauvorrichtung an einem Schlepper anbaubar ist, sowie mehreren Arbeitsaggregaten, die an zumindest einem Tragarm angelenkt sind, der an dem Maschinenrahmen um eine liegende, etwa in Fahrtrichtung weisende Tragarmschwenkachse schwenkbar gelagert und aus einer abgesenkten Arbeitsstellung in eine angehobene Transport- und/oder Vorgewendestellung verbringbar ist.

Bei landwirtschaftlichen Anbaugeräten mit großen Arbeitsbreiten werden regelmäßig mehrere Arbeitsaggregate verwendet, die quer gestaffelt hintereinander bzw. nebeneinander angeordnet sind, so dass sich ihre Arbeitsbreiten bzw. Fahrspuren ergänzen. Die Arbeitsaggregate können dabei mittels Tragarmen aufgehängt bzw. am Maschinenrahmen angelenkt sein und sind in einer Arbeitsstellung von einer vertikalen Längsmittelebene unterschiedlich weit quer beabstandet, um sich in der genannten Weise zu ergänzen und nebeneinander liegende Teilbereiche der Gesamtarbeitsbreite zu bearbeiten. Dabei ist es einerseits notwendig, die Arbeitsaggregate hinsichtlich ihrer Position relativ zum Maschinenrahmen zu verstellen, um für den Straßentransport eine zulässige Breite einzuhalten. Zum anderen ist es aber auch wünschenswert, unterschiedliche Arbeitsstellungen der Arbeitsaggregate einstellen zu können, um im Feldbetrieb verschiedene Funktionen und Arbeitsweisen ausführen zu können.

Das Verbringen der Arbeitsaggregate in die Transportstellung, in der die zulässige Straßenfahrbreite eingehalten ist, kann üblicherweise durch Verschwenken der Tragarme in eine aufrechte Stellung erfolgen, wodurch die Arbeitsaggregate ebenfalls aus ihrer liegenden Arbeitsstellung in eine aufrechte Transportstellung gelangen. Bei Anbaugeräten mit großen Arbeitsbreiten und mehreren Arbeitsaggregaten ergibt sich hierbei jedoch das Problem, dass die im Arbeitsbetrieb äußersten Arbeitsaggregate in eine große Höhe geschwenkt werden, was für das Unterfahren von Brücken, das Einfahren in Tunnels, aber auch für die Fahrstabilität aufgrund des hohen Schwerpunkts nicht akzeptabel ist. Insofern wurde bereits vorgeschlagen, teleskopierbare Tragarme zu verwenden oder die Tragarmschwenkachsen gegenüber der Fahrtrichtung spitzwinklig zu verkippen, um in der Transportstellung eine Höhenreduzierung zu erzielen. Zum anderen kommt es bei Geräten mit vielen Arbeitsaggregaten jedoch auch zu Kollisionsproblemen, wenn die Arbeitsaggregate alle in vorgenannter Weise in eine kompakte, möglichst nah am Maschinenrahmen befindliche Transportstellung verbracht werden sollen.

Die genannte Problematik wird verschärft, wenn im Arbeitsbetrieb verschiedene Arbeitsaggregatstellungen einstellbar sein sollen. Beispielsweise bei Mehrkreiselschwadern mit mehreren Rechkreiseln ist es gewünscht, verschiedene Rechkreiselpositionen einstellen zu können, um wahlweise einen Mehrfachschwad oder mehrere separate Schwade ablegen zu können. Soll beispielsweise ein zentraler Mittenschwad abgelegt werden, müssen die Rechkreisel kaskadenartig so positioniert werden, dass ein vorderster, äußerster Rechkreisel seinen Schwad an einen dahinter liegenden, weiter nach innen positionierten Rechkreisel übergibt, welcher dann den Schwad in der Mitte ablegt bzw. an einen ggf. noch weiteren, wieder ein Stück weiter innen positionierten Rechkreisel übergibt. Sollen indes mehrere, separate Schwade abgelegt werden, muss beispielsweise der zuvor genannte äußerste, vorderste Rechkreisel ein Stück weiter nach außen und/oder der nachfolgende Rechkreisel ein Stück weiter nach innen positioniert werden, so dass der vom vordersten, äußersten Rechkreisel abgelegte Schwad abgelegt und vom nachfolgenden Rechkreisel nicht aufgenommen, sondern liegengelassen wird, wobei der genannte nächste Rechkreisel neben dem abgelegten Schwad das dort liegende Erntegut aufnehmen und zu einem weiter innen liegenden Schwad zusammenrechen soll.

In ähnlicher Weise ist es auch bei Mähmaschinen wünschenswert, die Arbeitsposition der einzelnen Mähaggregate verstellen zu können, beispielsweise je nachdem, ob ein zusätzliches Frontmähwerk verwendet wird und wieviele Mähaggregate frontseitig angebaut sind, so dass je nach Vorhandensein oder Konfiguration des Frontmähwerks die heckseitigen Mähaggregate unterschiedlich positioniert werden müssen.

Insofern ist eine variable Breitenverstellbarkeit mit großen Stellbereichen auch in der abgesenkten Arbeitskonfiguration wünschenswert.

Der vorliegenden Erfindung liegt daher die Aufgabe zugrunde, ein verbessertes landwirtschaftliches Anbaugerät zu schaffen, das Nachteile des Standes der Technik vermeidet und Letzteren in vorteilhafter Weise weiterbildet. Insbesondere sollen die mehreren Arbeitsaggregate einerseits in ihrer abgesenkten Arbeitsstellung variabel mit einem großen Verstellbereich in verschiedene Breitenstellungen eingestellt werden können, während andererseits mit einem einfachen Rahmen- und Tragarmaufbau kollisionsfrei eine Transportstellung angefahren werden kann, in der die zulässige Straßentransportbreite und -höhe eingehalten ist.

Erfindungsgemäß wird die genannte Aufgabe durch ein landwirtschaftliches Anbaugerät gemäß Anspruch 1 gelöst. Bevorzugte Ausgestaltungen der Erfindung sind Gegenstand der abhängigen Ansprüche.

Es wird also vorgeschlagen, mehrere Arbeitsaggregate an einem Tragarm zusammenzufassen, dabei jedoch eine Verschwenkbarkeit der Arbeitsaggregate gegenüber dem Tragarm vorzusehen, deren Schwenkachse sich in der abgesenkten Arbeitsstellung aufrecht erstreckt, so dass die Arbeitsaggregate verschiedene Breitenstellungen einnehmen können. Erfindungsgemäß sind an dem zumindest einen Tragarm zumindest zwei Schwenkarme befestigt, die jeweils ein Arbeitsaggregat tragen und am Tragarm jeweils schwenkbar um eine Schwenkarmschwenkachse gelagert sind, die sich quer zur Tragarmlängsachse und quer zur Fahrtrichtung erstreckt. In der abgesenkten Arbeitsstellung können die Schwenkarme um die dann aufrechte Schwenkarmschwenkachse schwenken und hierdurch die Arbeitsaggregate relativ zum Tragarm weiter nach außen oder weiter nach innen verbringen. Für die angehobene Transportstellung kann durch die genannten Schwenkarme und ihre Schwenkbarkeit die Höhe der Arbeitsaggregate in der Transportstellung eingestellt werden. Die spinnenartige Trag- und Schwenkarmkonfiguration, bei der mehrere Arbeitsaggregate durch die genannten Schwenkarme nach Art von Satelliten an einem gemeinsamen Tragarm gehalten werden, erlaubt eine große Verstellbarkeit im bzw. für den Arbeitsbetrieb und ermöglicht gleichzeitig mit einem einfachen Rahmen und Tragarmaufbau das kollisionsfreie Anfahren einer Transportstellung, in der trotz der mehreren Arbeitsaggregate die Straßenbreite und -höhe eingehalten ist.

Die Trag- und Schwenkarme sind dabei vorteilhafterweise derart konfiguriert, dass sie sich in der abgesenkten Arbeitsstellung alle näherungsweise liegend ausgerichtet erstrecken.

Die Schwenkarme können vorteilhafterweise an einem auskragenden Endabschnitt des Tragarms angelenkt sein, wobei die an einem gemeinsamen Tragarm angelenkten Schwenkarme eine gemeinsame Schwenkachse oder auch ihre eigenen, separate Schwenkachsen besitzen können.

Um eine Bodenanpassung zu gewährleisten, kann vorgesehen sein, den zumindest einen Tragarm in der abgesenkten Arbeitsstellung schwimmend bzw. vorgespannt und/oder gewichtsentlastet, aber verschwenkbar zu führen, wobei eine Gewichtsentlastung beispielsweise durch eine Federeinrichtung und/oder einen vorgespannten Stellzylinder realisiert sein kann. Alternativ oder zusätzlich zu einer solchen Bodenanpassung durch den Tragarm können auch die Schwenkarme relativ zum Tragarm um liegende Achsen verkippbar geführt sein, beispielsweise mittels eines Schwenkarm-Anlenkstücks, das relativ zum Tragarm um die besagte Schwenkarmschwenkachse, die sich quer zur Tragarmlängsachse und quer zur Fahrtrichtung erstreckt, angelenkt ist und an dem wiederum der Schwenkarm um eine Wippachse, die sich quer zur vorgenannten Schwenkarmschwenkachse erstreckt, wippbar angelenkt ist. Eine kinematisch umgekehrte Anordnung ist ebenfalls möglich, d.h. der Schwenkarm kann um die in Arbeitsstellung aufrechte Schwenkarmschwenkachse an besagtem Anlenkstück gelagert sein, welches dann um die in Arbeitsstellung liegende Wippachse am Tragarm angelenkt ist.

Sind die Schwenkarme in der genannten Weise relativ zum Tragarm nicht nur nach außen und innen schwenkbar, sondern auch auf und nieder wippbar, kann den Schwenkarmen eine Gewichtsentlastungsvorrichtung beispielsweise in Form einer Federeinrichtung und/oder eines vorspannbaren Druckmittelzylinders zugeordnet sein, um eine Gewichtsentlastung und damit eine leichtfüßige Bodenanpassung zu erreichen. Alternativ oder zusätzlich kann den Schwenkarmen auch eine Hubvorrichtung zum Ausheben der Schwenkarme relativ zum Tragarm zugeordnet sein, beispielsweise um die Schwenkarme relativ zum Tragarm in eine Vorgewendestellung heben zu können. Hierbei kann der Tragarm in einer vorbestimmten Arbeitsstellung festgehalten und/oder gegen weiteres Absenken blockiert sein.

Alternativ oder zusätzlich kann jedoch auch der Tragarm in eine Vorgewendestellung ausgehoben werden, wobei dem Tragarm hierzu eine Hubvorrichtung zugeordnet sein kann, die den Tragarm relativ zum Maschinenrahmen verschwenken und ausheben kann. Um ein Ausheben der Arbeitsaggregate durch den Tragarm zu ermöglichen, kann vorgesehen sein, die vorgenannte Wippbarkeit der Schwenkarme relativ zum Tragarm zu begrenzen und/oder zu blockieren, beispielsweise durch einen begrenzten oder blockierbaren Stellweg der Gewichtsentlastungs- und/oder Hubvorrichtung, die den Schwenkarmen zugeordnet ist.

Um eine feingliedrige Bodenanpassung zu erreichen, können in Weiterbildung der Erfindung die Arbeitsaggregate an den Schwenkarmen zumindest einachsig verkippbar angelenkt, vorteilhafterweise auch mehrachsig pendelnd aufgehängt sein. Beispielsweise kann eine kardanische oder kugelgelenksartige Aufhängung der Arbeitsaggregate an den Schwenkarmen vorgesehen sein, die es ermöglicht, in der abgesenkten Arbeitsstellung das Arbeitsaggregat gegenüber dem Schwenkarm um eine liegende Querachse und/oder um eine in Fahrtrichtung weisende Schwenkachse zu verkippen. Hierdurch können die Arbeitsaggregate leichtfüßig sowohl Querwellen als auch Längswellen im Boden ausgleichen bzw. sich daran anpassen.

Die Arbeitsaggregate können vorteilhafterweise ein Tastfahrwerk besitzen, mittels derer das jeweilige Arbeitsaggregat individuell am Boden abgestützt ist. Diese Tastfahrwerke können dabei Räder und/oder Kufen und/oder Gleitteller umfassen.

Um die Schwenkarme - bei Betrachtung in der abgesenkten Arbeitsstellung - weiter nach außen oder weiter nach innen oder weiter nach vorne oder weiter nach hinten verschwenken zu können, können in Weiterbildung der Erfindung den Schwenkarmen Schwenkantriebe zugeordnet sein, die ein Verschwenken der Schwenkarme relativ zum Tragarm bewirken können. Dabei kann mehreren Schwenkarmen ein gemeinsamer Schwenkantrieb zugeordnet sein. Vorteilhafterweise kann auch jedem Schwenkarm sein eigener Schwenkantrieb zugeordnet sein, um jeden Schwenkarm separat verschwenken zu können. Beispielsweise können die genannten Schwenkantriebe Schwenkaktoren in Form von Druckmittelzylindern umfassen, die einerseits am Tragarm und andererseits an einem jeweiligen Schwenkarm angreifen.

Vorteilhafterweise können die Schwenkarme individuell verschwenkt und/oder relativ zueinander verschwenkt werden, so dass ein Spreizwinkel zwischen den Schwenkarmen variiert werden kann.

Die Verschwenkbarkeit der Schwenkarme ist dabei vorteilhafterweise derart beschaffen, dass ein Schwenkarm und das daran angebrachte Arbeitsaggregat in Fahrtrichtung betrachtet vor den Tragarm schwenkbar und ein anderer Schwenkarm mit dem daran angebrachten Arbeitsaggregat in Fahrtrichtung betrachtet hinter den Tragarm schwenkbar ist. Alternativ oder zusätzlich kann die Verschwenkbarkeit auch derart beschaffen sein, dass mehrere Tragarme gleichzeitig in Fahrtrichtung betrachtet hinter den Tragarm und/oder in Fahrtrichtung betrachtet gleichzeitig vor den Tragarm schwenkbar sind.

Um bei einem Verschwenken der Schwenkarme relativ zum Tragarm zu vermeiden, dass die daran angebrachten Arbeitsaggregate eine vorbestimmte Ausrichtung zur Fahrtrichtung verlieren, kann in Weiterbildung der Erfindung vorgesehen sein, dass die Arbeitsaggregate an den Schwenkarmen jeweils um eine Lenkachse schwenkbar sind, die sich quer zur Längsachse der Schwenkarme und quer zur Fahrtrichtung erstreckt. Insbesondere kann sich die genannte Lenkachse in der abgesenkten Arbeitsstellung der Schwenkarme im Wesentlichen aufrecht erstrecken.

Vorteilhafterweise kann dabei den Arbeitsaggregaten eine Lenkeinrichtung zugeordnet sein, die ein Einlenken der Arbeitsaggregate gegenüber den Schwenkarmen steuert, insbesondere die Arbeitsaggregate unabhängig von der Schwenkstellung der Schwenkarme in einer vorbestimmten Ausrichtung zur Fahrtrichtung hält.

Eine solche Lenkeinrichtung kann grundsätzlich unterschiedlich ausgebildet sein, beispielsweise einen fremdenergiebetätigbaren Lenkaktor, beispielsweise in Form eines Druckmittelzylinders, umfassen, welcher sensorgesteuert oder in anderer Weise die Arbeitsaggregate einlenkt.

In vorteilhafter Weiterbildung der Erfindung kann die Lenkeinrichtung eine Parallelogrammlenkerführung umfassen, die bezüglich der vorgenannten Lenkachse wirksam ist und bei einem Verschwenken der Schwenkarme das jeweils daran angelenkte Arbeitsaggregat nachsteuert bzw. nachlenkt. Eine solche Parallelogrammlenkerführung kann zumindest einen Lenker umfassen, der einerseits am Tragarm gelenkig angelenkt ist und andererseits am Arbeitsaggregat gelenkig angelenkt ist, wobei die genannten Anlenkpunkte bzw. -gelenke von der Schwenkarmschwenkachse und der Lenkachse jeweils beabstandet sind, so dass sich insgesamt eine parallelogrammlenkerartige Führung ergibt.

Um das Ausheben der Arbeitsaggregate in die Vorgewende- und/oder Transportstellung zu vereinfachen, kann eine Steuervorrichtung vorgesehen sein, die den Aushebevorgang automatisiert und vorteilhafterweise dabei auch gleichzeitig die Schwenkantriebe für das Verschwenken der Schwenkarme relativ zum Tragarm ansteuert, um die Schwenkarme in der Vorgewendestellung und/oder in der Transportstellung in vorbestimmten Schwenkstellungen relativ zum Tragarm zu halten.

Insbesondere kann eine Vorgewendesteuereinrichtung vorgesehen sein, die das Ausheben der Arbeitsaggregate in die Vorgewendestellung steuert, in der die Schwenkarme relativ zum Tragarm bezüglich der genannten Schwenkarmschwenkachsen in Schwenkstellungen gehalten werden, die im Wesentlichen den Schwenkstellungen in der abgesenkten Arbeitsstellung entsprechen können. Für das Ausheben in die Vorgewendestellung müssen die Schwenkstellungen der Schwenkarme nicht verändert werden, gleichwohl könnten sie jedoch verändert werden.

Das Ausheben in die Vorgewendestellung kann durch Anheben der Schwenkarme relativ zum Tragarm und/oder durch Anheben des Tragarms relativ zum Maschinenrahmen erfolgen, wie zuvor schon erläutert.

Alternativ oder zusätzlich zu einer solchen Vorgewendesteuereinrichtung kann eine Transportsteuervorrichtung vorgesehen sein, die das Verbringen der Arbeitsaggregate in die Transportstellung steuert. Die genannte Transportsteuervorrichtung kann dabei einerseits die Hubvorrichtung des Tragarms ansteuern, um den Tragarm in eine im Wesentlichen aufrechte Transportstellung zu verbringen. Andererseits kann die Transportsteuervorrichtung die Schwenkantriebe der Schwenkarme ansteuern, um die Schwenkarme in eine Transportstellung zu verschwenken, in der die Schwenkarme sich im Wesentlichen quer zum Tragarm erstrecken und/oder vom Tragarm ausgehend leicht schräg abfallend und/oder leicht schräg ansteigend angeordnet sind, so dass die an den Schwenkarmen angebrachten Arbeitsaggregate möglichst tief positioniert sind, dabei jedoch noch die ausreichende Bodenfreiheit gewährleistet ist.

In vorteilhafter Weiterbildung der Erfindung können sich die Schwenkarme in der Transportstellung zu gegenüberliegenden Seiten des Tragarms hin erstrecken, wobei beispielsweise ein Schwenkarm sich vom Tragarm nach vorne und ein Schwenkarm sich vom Tragarm nach hinten erstrecken kann.

Die Erfindung wird nachfolgend anhand eines bevorzugten Ausführungsbeispiels und zugehöriger Zeichnungen näher erläutert. In den Zeichnungen zeigen:
- Fig. 1:: eine schematische, perspektivische Darstellung eines landwirtschaftlichen Anbaugeräts in Form eines Kreiselschwaders gemäß einer vorteilhaften Ausführung der Erfindung, wobei die Arbeitsaggregate in Form von Rechkreiseln in einer abgesenkten Arbeitsstellung gezeigt sind, und
- Fig. 2:: eine Seitenansicht des Anbaugeräts aus Fig. 1 quer zur Fahrtrichtung, wobei die Rechkreisel in einer ausgehobenen Transportstellung gezeigt sind.

Wie die Figuren zeigen, kann das Anbaugerät 1 als Heuwerbungsmaschine beispielsweise in Form eines Schwaders ausgebildet sein, dessen Arbeitsaggregate 2 Rechkreisel bilden können, deren Rechzinken 3 an Zinkentragarmen 4 gelagert sind, die in der abgesenkten Arbeitsstellung um eine aufrechte Rechkreiselachse umlaufen und dabei zyklisch verdreht werden, so dass sich die Rechzinken 3 zyklisch auf den Boden zu und vom Boden weg bewegen, wie dies an sich bekannt ist. Alternativ können jedoch auch anders ausgebildete Arbeitsaggregate 2 Verwendung finden und das Anbaugerät 1 beispielsweise als Mähmaschine mit mehreren Mähaggregaten oder als Zetter mit Zettkreiseln oder in anderer Weise ausgebildet sein.

Das Anbaugerät 1 umfasst dabei einen Maschinenrahmen 5, der sich im Wesentlichen in Längsrichtung näherungsweise parallel zur Fahrtrichtung 6 erstrecken kann, wobei ein Fahrwerk 7 zum Abstützen des Maschinenrahmens 5 am Boden vorgesehen sein kann. Durch eine Anbauvorrichtung 8 kann der Maschinenrahmen 5 an einen nicht dargestellten Schlepper angebaut werden, wobei die Anbauvorrichtung eine Deichsel umfassen bzw. der Maschinenrahmen 5 nach Art einer Deichsel gegenüber der Anbauvorrichtung 8 verschwenken kann.

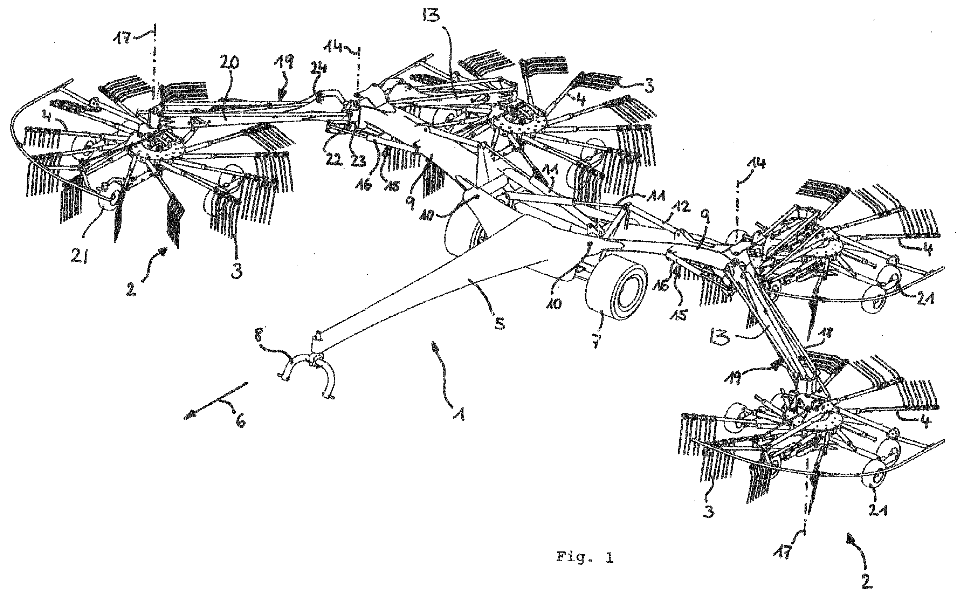

Wie Fig. 1 zeigt, sind an dem Maschinenrahmen 5 mehrere Tragarme 9 befestigt, die um liegende, in Fahrtrichtung weisende Tragarmschwenkachsen 10 relativ zum Maschinenrahmen 5 auf und nieder gewippt werden können, wobei sich die genannten Tragarme 9 im Wesentlichen quer zum Maschinenrahmen 5 und/oder quer zur Fahrtrichtung 6 erstrecken können.

Um die Tragarme 9 anheben und absenken zu können, kann den Tragarmen 9 jeweils eine Hubvorrichtung oder auch eine gemeinsame Hubvorrichtung 11 zugeordnet sein, beispielsweise in Form von Tragarm-Hubzylindern 12, die einerseits an den Tragarmen 9 und andererseits am Maschinenrahmen 5 angreifen.

Die genannten Hubvorrichtungen 11 können hierbei in der in Fig. 1 gezeigten, abgesenkten Arbeitsstellung die Tragarme 9 in einer vorgegebenen Stellung festhalten bzw. fixieren. Alternativ können die Tragarme 9 auch schwimmend und/oder gewichtsentlastet in der Arbeitsstellung gehalten sein, um eine Bodenanpassung der Arbeitsaggregate zu ermöglichen.

In der gezeigten Ausführung sind mehrere Tragarme 9 zu gegenüberliegenden Seiten des Maschinenrahmens 5 hin vorgesehen, wobei auf jeder Seite ein Tragarm oder auch mehrere Tragarme vorgesehen sein können. Alternativ kann auch nur ein einzelner Tragarm auf einer Seite vorgesehen sein.

An den Tragarmen 9 sind dabei jeweils mehrere Schwenkarme 13 befestigt bzw. angelenkt, die von den äußeren, auskragenden Enden der Tragarme 9 weiter auskragen bzw. sich hiervon ausgehend erstrecken. Die Schwenkarme 13 tragen dabei jeweils ein Arbeitsaggregat 2, das am freien, auskragenden Ende der Schwenkarme 13 jeweils mehrachsig pendelnd aufgehängt sein kann, um Kippbewegungen des Arbeitsaggregats 2 gegenüber dem jeweiligen Schwenkarm 13 zuzulassen und hierdurch eine weitere Bodenanpassung zu erreichen.

Die Schwenkarme 13 sind dabei an dem jeweiligen Tragarm 9 um Schwenkarmschwenkachsen 14 schwenkbar gelagert, die sich in der in Fig. 1 gezeigten abgesenkten Arbeitsstellung im Wesentlichen aufrecht erstrecken. Dabei können für die mehreren, an einem gemeinsamen Tragarm 9 angelenkten Schwenkarme 13 separate Schwenkarmschwenkachsen 14 vorgesehen sein, alternativ jedoch auch eine gemeinsame Schwenkarmschwenkachse 14, die sich in der genannten Weise quer zur Längsachse des Tragarms 9 und quer zur Fahrtrichtung 6 erstreckt.

Um die Schwenkarme 13 relativ zu den Tragarmen 9 verschwenken zu können, sind Schwenkantriebe 15 vorgesehen, beispielsweise in Form von Schwenkzylindern 16, die einerseits am Tragarm 9 und andererseits am jeweiligen Schwenkarm 13 angreifen. Hierbei kann jedem Schwenkarm 13 ein eigener Schwenkzylinder 16 zugeordnet sein, um die Schwenkarme 13 individuell relativ zum Tragarm 9 verschwenken zu können.

Durch Verschwenken der Schwenkarme 13 um die besagte Schwenkarmschwenkachse 14 können die Arbeitsaggregate 2 in der in Fig. 1 gezeigten Arbeitsstellung in der gewünschten Weise weiter nach außen oder weiter nach innen und dabei auch weiter nach vorne oder weiter nach hinten geschwenkt werden. Hierdurch können verschiedene Schwadkonfigurationen abgelegt werden, beispielsweise ein gemeinsamer Mittelschwad oder mehrere separate Schwade.

Um beim Verschwenken der Schwenkarme 13 die Arbeitsaggregate 2 dennoch in einer gewünschten Ausrichtung zur Fahrtrichtung zu halten, können die Arbeitsaggregate 2 um Lenkachsen 17 gegenüber den Schwenkarmen 13 verschwenkt werden. Die genannten Lenkachsen 17 erstrecken sich in der abgesenkten Arbeitsstellung, die in Fig. 1 gezeigt ist, im Wesentlichen aufrecht und können mit der Rechkreiselachse zusammenfallen.

Eine Lenkeinrichtung 18 kann, wie Fig. 1 zeigt, eine Parallelogrammlenkerführung 19 umfassen. Dabei sind Lenkstangen 20 vorgesehen, die einerseits am Tragarm 9 und andererseits am Arbeitsaggregat 2 angelenkt sind, und zwar jeweils beabstandet von der jeweiligen Schwenkarmschwenkachse 14 und der Lenkachse 17, so dass beim Verschwenken des jeweiligen Schwenkarms 13 ein Nachsteuern des Arbeitsaggregats 2 bewirkt wird, welches das Arbeitsaggregat 2 in einer gewünschten fahrtrichtungsparallelen Ausrichtung hält. Die Arbeitsaggregate 2 können hierbei insbesondere derart gelenkt bzw. gesteuert sein, dass sich ein Tastfahrwerk 21, mittels dessen das jeweilige Arbeitsaggregat 2 am Boden abgestützt ist, in einer fahrtrichtungsparallelen Ausrichtung hält.

Um eine weiter verbesserte Bodenanpassung zu erreichen, können die genannten Schwenkarme 13 relativ zum Tragarm 9 um Wippachsen 22 auf und nieder wippen, wobei sich die besagten Wippachsen 22 in der abgesenkten Arbeitsstellung gemäß Fig. 1 im Wesentlichen liegend ausgerichtet erstrecken und im Wesentlichen quer zur Längsachse der Schwenkarme 13 verlaufen. Diese Wippbarkeit kann beispielsweise durch Anlenkstücke 23 erzielt werden, mittels derer die Schwenkarme 13 am Tragarm 9 angelenkt sind. Beispielsweise kann ein jeweiliger Schwenkarm 13 um eine Wippachse 22 zum jeweiligen Anlenkstück 23 auf und nieder wippen, während das besagte Anlenkstück 23 selbst um die aufrechte Schwenkarmschwenkachse 14 am Tragarm 9 gelagert ist.

Durch in der Zeichnung nicht eigens dargestellte Gewichtsentlastungs- und/oder Hubvorrichtungen 24 kann das Wippen der Schwenkarme 13 zum Tragarm 9 gesteuert bzw. bewirkt werden. Die besagten Gewichtsentlastungs- und/oder Hubvorrichtungen 24 können beispielsweise eine Federeinrichtung umfassen und/oder einen Hubantrieb beispielsweise in Form eines Hubzylinders, der vorteilhafterweise druckvorgespannt sein und/oder druckbeaufschlagt werden kann. Durch eine solche Gewichtsentlastungseinrichtung, die die Schwenkarme 13 gegenüber den Tragarmen 9 gewichtsentlastet, kann eine Gewichtsentlastung erreicht werden, die von der Schwenkstellung der Schwenkarme 13 unabhängig ist. Wird indes eine Gewichtsentlastung über die Tragarme 9 vorgesehen, ist es vorteilhaft, die Schwenkstellung der Schwenkarme 13 und damit die Ausladung der Arbeitsaggregate 2 zu berücksichtigen.

Durch die genannte Hubvorrichtung 24 können die Arbeitsaggregate 2 auch gegenüber dem Tragarm 9 in eine Vorgewendestellung verbracht werden. Hierzu kann der Tragarm 9 in einer festen Stellung gehalten werden, so dass nur die Schwenkarme 13 ein Stück weit nach oben schwenken, um die Arbeitsaggregate 2 vom Boden auszuheben. Alternativ oder zusätzlich kann auch der Tragarm 9 ein Stück weit angehoben werden.

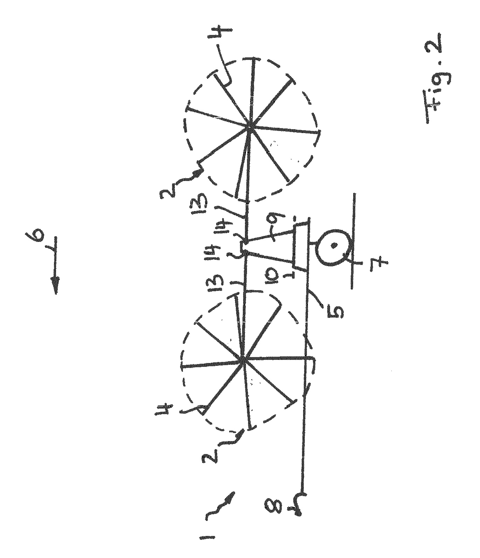

Um die Arbeitsaggregate 2 in die Transportstellung zu verbringen, wie dies Fig. 2 zeigt, können die Tragarme 9 in eine im Wesentlichen aufrechte Stellung angehoben werden. Dabei - vorher, während oder nachher - können die Schwenkarme 13 in eine Schwenkstellung relativ zu den Tragarmen 9 verbracht werden, in der die Arbeitsaggregate 2 eine möglichst geringe Höhe einnehmen, andererseits aber noch die Bodenfreiheit gewährleistet ist.

## Patentansprüche

1. Landwirtschaftliches Anbaugerät mit einem Maschinenrahmen (5), der durch ein Fahrwerk (7) am Boden abstützbar und durch eine Anbauvorrichtung (8) an einem Schlepper anbaubar ist, sowie mehreren Arbeitsaggregaten (2), die an zumindest einem Tragarm (9) angelenkt sind, der am Maschinenrahmen (5) um eine liegende, etwa in Fahrtrichtung weisende Tragarmschwenkachse (10) schwenkbar gelagert und aus einer abgesenkten Arbeitsstellung in eine angehobene Transport- und/oder Vorgewendestellung verbringbar ist, **dadurch gekennzeichnet, dass** an dem zumindest einen Tragarm (9) zumindest zwei Schwenkarme (13) befestigt sind, die jeweils ein Arbeitsaggregat (2) tragen und am Tragarm (9) jeweils schwenkbar um eine Schwenkarmschwenkachse (14), die sich quer zur Tragarmlängsachse und quer zur Fahrtrichtung (6) erstreckt, gelagert sind.

2. Landwirtschaftliches Anbaugerät nach dem vorhergehenden Anspruch, wobei die Arbeitsaggregate (2) an den Schwenkarmen (13) jeweils verkippbar, vorzugsweise mehrachsig pendelnd, aufgehängt sind.

3. Landwirtschaftliches Anbaugerät nach einem der vorhergehenden Ansprüche, wobei die Arbeitsaggregate (2) an den Schwenkarmen (13) jeweils um eine Lenkachse (17), die sich quer zur Schwenkarmlängsachse und quer zur Fahrtrichtung (6) erstreckt, lenkbar gelagert sind.

4. Landwirtschaftliches Anbaugerät nach dem vorhergehenden Anspruch, wobei den Arbeitsaggregaten (2) jeweils eine Lenkeinrichtung zum Lenken der Arbeitsaggregate (2) gegenüber den Schwenkarmen (13) und/oder Halten der Arbeitsaggregate (2) in Fahrtrichtung auch bei einem Verschwenken der Schwenkarme (13) zugeordnet ist.

5. Landwirtschaftliches Anbaugerät nach dem vorhergehenden Anspruch, wobei die Lenkeinrichtung (18) eine Parallelogrammlenkerführung (19) umfasst, die zumindest einen Lenker (24) aufweist, der einerseits am Tragarm (9) und andererseits am Arbeitsaggregat (2) gelenkig angelenkt ist, wobei die Anlenk-Gelenkpunkt des Lenkers (24) von der Schwenkarmschwenkachse (14) und der Lenkachse (17) beabstandet sind.

6. Landwirtschaftliches Anbaugerät nach einem der vorhergehenden Ansprüche, wobei die Schwenkarme (13) an einem auskragenden Endabschnitt des Tragarms (9) angelenkt sind und/oder eine gemeinsame Schwenkarmschwenkachse (14) oder separate Schwenkarmschwenkachsen (14) für die genannten Schwenkarme (13) an einem auskragenden Endabschnitt des Tragarms (9) vorgesehen ist/sind.

7. Landwirtschaftliches Anbaugerät nach einem der vorhergehenden Ansprüche, wobei die Schwenkarme (13) zusammen mit dem Tragarm (9) aushebbar und aus einer abgesenkten Arbeitsstellung, in der der Tragarm (9) und die Schwenkarme (13) eine liegende Ausrichtung einnehmen, in eine angehobene Transport- und/oder Vorgewendestellung verbringbar sind.

8. Landwirtschaftliches Anbaugerät nach einem der vorhergehenden Ansprüche, wobei die Schwenkarme (13) um die Schwenkarmschwenkachse/n (14) relativ zueinander schwenkbar sind, so dass ein Spreizwinkel zwischen den Schwenkarmen variabel einstellbar ist.

9. Landwirtschaftliches Anbaugerät nach dem vorhergehenden Anspruch, wobei jedem Schwenkarm (13) ein Schwenkantrieb (15) zum Verschwenken relativ zum Tragarm (9) zugeordnet ist.

10. Landwirtschaftliches Anbaugerät nach einem der vorhergehenden Ansprüche, wobei ein Schwenkarm (13) mit dem daran angebrachten Arbeitsaggregat in Fahrtrichtung vor den Tragarm (9) und ein Schwenkarm (13) mit dem daran angebrachten Arbeitsaggregat (2) in Fahrtrichtung hinter den Tragarm schwenkbar ist.

11. Landwirtschaftliches Anbaugerät nach einem der vorhergehenden Ansprüche, wobei eine Vorgewendesteuereinrichtung zum Verbringen der Arbeitsaggregate (2) in eine Vorgewendestellung, in der die Schwenkarme (13) in eine gegenüber der Arbeitsstellung angehobene Stellung verbracht sind, vorgesehen ist.

12. Landwirtschaftliches Anbaugerät nach einem der vorhergehenden Ansprüche, wobei eine Transportsteuereinrichtung zum Verbringen der Arbeitsaggregate (2) in eine Transportstellung, in der der Tragarm (9) in eine aufrechte Stellung angehoben ist und die Schwenkarme (13) eine liegende Ausrichtung einnehmen, vorgesehen ist.

13. Landwirtschaftliches Anbaugerät nach dem vorhergehenden Anspruch, wobei die Transportsteuereinrichtung derart ausgebildet ist, dass die Schwenkarme (13) in der Transportstellung zu gegenüberliegenden Seiten des Tragarms (9) hin verschwenkt sind.

14. Landwirtschaftliches Anbaugerät nach einem der vorhergehenden Ansprüche, wobei die Schwenkarme (13) jeweils relativ zum Tragarm (9) um eine Wippachse (22), die sich quer zur Schwenkarmschwenkachse (14) und quer zur Schwenkarmlängsachse erstreckt, wippbar gelagert sind.

15. Landwirtschaftliches Anbaugerät nach dem vorhergehenden Anspruch, wobei den Schwenkarmen (13) eine Gewichtsentlastungs- und/oder Hubvorrichtung (24) zum Gewichtsentlasten und/oder Verschwenken der Schwenkarme (13) um die Wippachse (22) zugeordnet ist, wobei die Gewichtsentlastungs- und/oder Hubvorrichtung (24) mit den Schwenkarmen (13) zusammen gegenüber dem Tragarm (9) verschwenkbar ist.
